# EUROPEAN PATENT APPLICATION

(11) **EP 4 725 318 A1**
(43) Date of publication of application: **15.04.2026**
(21) Application number: 24746769.9
(22) Date of filing: 06.06.2024
(51) Int. Cl.: A23L 2/385, A23L 2/72, A23L 2/84, A23L 2/38

(54) **PROCESS FOR OBTAINING SOLUBILIZED SEED EXTRACTS FOR THE PRODUCTION OF FOOD BEVERAGES**

(30) Priority: 09.06.2023 ES 202330482
(71) Applicant: Aurum Process Technology, S.L., 30560 Alguazas (Murcia) (ES)
(72) Inventor: LINARES GIL, Jesús María, 30560 Alguazas (Murcia) (ES)
(74) Representative: Herrero & Asociados, S.L.
(86) International application number: PCT/ES2024/070352
(87) International publication number: WO 2024/252049

(57) **Abstract**

A process for obtaining solubilised seed extracts for the production of food beverages, which operates entirely in a continuous line and comprises the following sequence of steps:
- initial heat treatment of the seeds with the addition of water;
- in-line grinding of the seeds treated in the previous stage to form a paste;
- enzymatic slurry treatment and in-line maintenance for component solubilisation; and
- separation of the liquid extract by continuous filtration.

## Description

### OBJECT OF THE INVENTION

The present invention falls within the technical field of the preparation of foodstuffs and concerns in particular a continuous industrial process for obtaining solubilised seed extracts for the production of food beverages, especially designed for milk substitute beverages of vegetable origin.

### BACKGROUND OF THE INVENTION

Globally, more and more people are adopting eating habits such as vegetarian or vegan diets. Among the products whose consumption is increasing the most are plant-based milk substitutes.

Vegetable drinks are increasingly taking up space alongside traditional milk in cafés, supermarkets and kitchens. Like soy and almond variants, modern oat, spelt or rice products are especially in demand among young urban consumers who value individual taste, health and fitness and who demand lactose-free, climate-friendly and animal-friendly food. Plant-based beverages are sustainable products, which involve less energy consumption, use of agricultural land, ocean acidification and greenhouse gases.

With regard to the industrial processes for obtaining plant-based beverages, it should be mentioned first of all that there are two main options for the form of the starting raw material: whole grains or flour. The use of grains implies high investment and operating costs for the milling equipment, but the raw material is cheaper. Flour, on the other hand, is more expensive, but the investment and operating costs are lower and more flexible.

Of all the vegetable products from which these beverages are made, oats are particularly important in terms of production volume and have specific processing requirements.

The conventional process for obtaining beverages of plant origin usually comprises the following sequence of steps:
- Mixing and enzyme treatment: The flour is mixed with hot water in a process tank. The hot water causes the starch present in the seed to gel to increase viscosity and optimise the efficiency of the enzymatic reaction. After enzyme dosing and high shear mixing, the subsequent enzymatic reaction breaks down the starch into dextrin or sugar, while rapidly reducing the viscosity.
- Heating and cooling: A recirculation loop can be added to the process to adjust the temperature for a second enzymatic reaction to break down the dextrin into different saccharides according to the given sweetness profile. In this case, the suspension is first cooled to the optimal reaction temperature. One option could be to deactivate the enzymes just before extraction, which would also be done by heat treatment.
- Extraction in one or two steps: The slurry obtained is fed into a centrifuge-decanter to separate unwanted fibres and keep the desired starch and β-glucans in the product. A second redilution and extraction step can be added to increase the solids and protein yield. The solids from the first step are washed with water which is separated and used for the initial mixing of the process.
- Final formulation: The extracted oat base is then formulated with different ingredients, e.g. oil to improve the mouthfeel, as well as salt or other flavours. Specific high shear dosing and mixing systems are used for this purpose.
- UHT heat treatment and heat recovery: Oat beverages are sold as ready-to-drink beverages in long-life containers. To make this possible, the beverage is subjected to ultra-high temperature (UHT) treatment and then packaged using aseptic equipment. The direct method of doing this, by placing the product in direct contact with the hot steam, achieves rapid heat transfer and a smooth flow of the product. Alternatively, a safe and economical process in which the product is not in contact with the heating media is also possible. The choice of method depends on the product properties and the mode of production. Heat recovery equipment can be included to save energy in both processes.
- Homogenisation and aseptic storage: The homogeniser ensures the necessary fine distribution of particles and fat bubbles in the product. A deaerator is also used to reduce the oxygen in the beverages. Both processes result in an aseptic beverage that can be stored under aseptic conditions before packaging.

If grains are used as raw material, it is also necessary to grind them beforehand.

The conventional process of obtaining plant-based beverages is energy-intensive in the stages of grinding the seeds, separation of solids by centrifugal decanting and the necessary concentration from an initial dilution with a high proportion of water, which is added in a ratio of at least 4:1 to the weight of the seeds.

As mentioned above, one or more enzyme treatments are required, which are carried out in batch process tanks, known as batch process. In other words, a tank is filled with the product to be treated, the treatment is carried out and the treated product is discharged for further processing. In order to operate continuously, a battery of enzymatic treatment tanks is needed, so that there is always one tank receiving the product to be treated and another tank delivering the treated product.

As the process involves loading and unloading tanks and several stages of enzymatic treatment, it requires a large investment in industrial machinery, the process times are long and cause qualitative degradation and it is not possible to ensure that all seeds are treated under the same conditions and at the same time.

There is therefore a need for a process to obtain solubilised seed extracts for the production of plant-based milk substitute beverages that overcomes the aforementioned drawbacks of the current state of the art.

### DESCRIPTION OF THE INVENTION

The object of the invention consists of a continuous line process for obtaining solubilised seed extracts for the production of food beverages which, unlike current processes, works in a continuous line instead of in batches.

The procedure is especially designed for the case where food beverages are the substitute for milk, and more particularly for the case of oatmeal, but not limited to these options.

The procedure for obtaining solubilised seed extracts basically comprises the following sequence of successive stages:
- Heat treatment of the seeds with a reduced proportion of water;
- In-line grinding of the seeds to form a paste;
- Addition of enzymes to the paste and in-line maintenance for solubilisation of components;
- Separation of the liquid extract by continuous filtration; and
- Continuous washing of the separated solids for maximum extraction yield, using the wash water in the first stage of seed treatment.

The main difference with respect to current treatments is that it is a completely in-line process, i.e. from the beginning the seed advances without including any stage in which it is treated in a reactor or tank to retain it. Moreover, in the particular case of oats, the seed is subjected to a multi-enzymatic treatment in a single stage.

The continuous in-line process with a single enzymatic treatment step reduces process times, simplifies the design of the production plant and reduces the investment cost. In addition, the energy consumption of the grinding stage is greatly reduced, thanks to the hydration and heating pre-treatment that softens the seeds. Energy consumption in solids separation is also reduced by the use of filtration instead of decanting.

The process makes it possible to obtain an extract with a higher initial concentration because it requires the addition of a much smaller quantity of water than in current processes, thus making it possible to produce a concentrated extract with a much lower energy consumption in the concentration phase. This concentrated extract reduces packaging, storage and transport costs, and is then diluted at the time of preparation of the final beverage for consumption.

### PREFERRED EMBODIMENT OF THE INVENTION

A detailed explanation of an example of a preferred embodiment of the subject matter of the present invention is given below.

The described continuous in-line process for obtaining solubilised seed extracts for the production of food beverages comprises the following sequence of steps:
- heat treatment of the seeds with water. For this purpose, an auger feeder is used to feed a continuous quantity of seeds together with a controlled flow of water into the upper part of a vertical mixing tank, into which steam is also injected to control the temperature of the process. The treated mixture of seed and water is drawn from the bottom of the tank also continuously, thus ensuring a uniform treatment time for the seeds.
- in-line grinding of the seeds to form a paste, by means of an in-line shear mill placed at the outlet of the heat treatment tank;
- enzymatic treatment of the slurry, with continuous injection of the enzymes into the inlet pipe of the slurry to the grinder by means of a dosing pump, and in-line holding for solubilisation of components, inside a vertical holding tank, with adequate volume so that the residence time of the product in the tank is sufficient to complete the enzymatic reactions;
- separation of the liquid extract by continuous filtration, by introducing the product inside a cylindrical sieve with a scraping system on the wall of the sieve to prevent clogging, so that the liquid phase passes through the sieve and the solid phase advances to the exit of the sieve;
- washing of the solids in a vertical column down which they flow in counter current with a flow of wash water. At the bottom of the column the washed solids are removed and at the top of the column the wash water is recovered for the initial seed treatment stage; and
- concentration of the extract obtained to achieve the desired final concentration, by means of a forced circulation tubular concentrator.

The hot hydration pre-treatment of the whole seeds facilitates subsequent grinding. In the enzyme treatment, a water: seed ratio of 2:1 is used for solubilisation. The seed paste also undergoes a single enzymatic solubilisation treatment with a combination of several different enzymes such as alpha-amylase, gluco-amylase, protease or cellulase, which act together and simultaneously.

## Claims

1. A process for obtaining solubilised seed extracts for the production of food beverages **characterised in that** it entirely operates in a continuous line and comprises the following sequence of stages:
- initial heat treatment of the seeds with the addition of water;
- in-line grinding of the seeds treated in the previous stage to form a paste;
- enzymatic slurry treatment and in-line maintenance for component solubilisation; and
- separation of the liquid extract by continuous filtration.

2. The process according to claim 1 further comprising a final stage of backwashing the separated solids with water in order to increase the extraction yield by using the wash water in the addition to the seeds.

3. The process according to claim 1, further comprising a final stage of concentration of the extract obtained to obtain a highly concentrated product which is used as a base or ingredient for the preparation of beverages or other foodstuffs.

4. The process according to any one of the preceding claims wherein the seed paste receives a single enzymatic solubilisation treatment with a combination of several different enzymes of the alpha-amylase, gluco-amylase, protease or cellulase type, acting together and simultaneously.

5. The process according to any one of the preceding claims wherein in the enzymatic treatment stage a water: seed ratio of 2:1 is used for solubilisation.

6. The process according to any one of the preceding claims wherein the continuous filtration is carried out by means of a self-cleaning sieve.

7. The process according to any one of the preceding claims wherein the stage of initial heat treatment of the seeds with addition of water uses an auger dosing device to introduce a continuous amount of seeds together with a controlled flow of water into the top of a vertical mixing tank, wherein steam is also injected to control the temperature of the process.

8. The process according to any one of the preceding claims wherein the in-line seed grinding stage uses an in-line shear mill positioned at the outlet of the heat treatment tank.

9. The process according to any one of the preceding claims wherein the enzymes are injected into the inlet pipe to the in-line crusher, and the outlet pipe from the crusher is connected to a vertical holding tank, with a volume so that the residence time of the product in the tank is sufficient to complete the enzymatic reactions of component solubilisation.
